# EUROPEAN PATENT APPLICATION

(11) **EP 4 497 875 A1**
(43) Date of publication of application: **29.01.2025**
(21) Application number: 22932498.3
(22) Date of filing: 22.03.2022
(51) Int. Cl.: E02F 3/43, E02F 9/20

(54) **WORK MACHINE**

(71) Applicant: Hitachi Construction Machinery Co., Ltd., Taito-ku Tokyo 110-0015 (JP)
(72) Inventor: ISHII Hiroki, Tsuchiura-shi, Ibaraki 300-0013 (JP); YAMAMOTO Shinjiro, Tsuchiura-shi, Ibaraki 300-0013 (JP); SHIWAKU Koji, Tsuchiura-shi, Ibaraki 300-0013 (JP)
(74) Representative: MERH-IP Matias Erny Reichl Hoffmann Patentanwälte PartG mbB
(86) International application number: PCT/JP2022/013238
(87) International publication number: WO 2023/181128

(57) **Abstract**

It is an object of the present invention to provide a work machine that is capable of appropriately setting a target locus and target postures for a work implement depending on an excavation environment and an excavation object under automatic excavation control. To accomplish the object, a controller calculates a target locus passing through an excavation starting position where a control point is positioned when an excavation is started, an excavation-in-progress position where the control point is positioned when the excavation is in progress, and an excavation finishing position where the control point is positioned when the excavation is finished, and a target posture for the work implement at the time the control point moves on the target locus, and controls a control valve such that the control point moves on the target locus and that a posture of the work implement at the time where the control point moves on the target locus matches the target posture.

## Description

### Technical Field

The present invention relates to a work machine for performing automatic excavation control, for example.

### Background Art

There is excavating and loading work for excavating soil with a work machine (e.g., a hydraulic excavator) having a work device (e.g., a front work device) driven by hydraulic actuators and loading the excavated soil onto a transport vehicle (e.g., a dump truck) having a transport device (e.g., a vessel).

Research has been carried out for performing such excavating and loading work under automatic control. For automatically controlling a construction machine, it is general practice to draw up an operation plan for specifying along what locus a work device is to be operated to generate a target locus.

Patent Document 1 discloses a technology for generating a target locus based on the ratio of an excavation depth to an excavation length. According to the document, a target locus is generated according to a predetermined excavation curve ratio representing the ratio of an excavation depth to an excavation length. The document refers to also a desired value of the excavation curve ratio.

### Prior Art Document

### Patent Document

Patent Document: JP-2020-041354-A

### Summary of the Invention

### Problems to be Solved by the Invention

It is possible to generate a target locus for the excavating work carried out by a hydraulic excavator, using the technology disclosed in Patent Document 1. However, the document makes no description of the gradient of an excavation surface, the hardness of an excavation object, or the like that vary an appropriate excavation locus. Hydraulic excavators are used in various environments and handle various excavation objects, and if a hydraulic excavator performs excavation work along an inappropriate target locus, it may not excavate sufficient soil with its bucket, resulting in a reduction in work efficiency, and may have the bucket driven too deeply in soil and fail to operate more. It is therefore desirable to be able to generate appropriate target trajectories for various gradients of excavation surfaces and various degrees of hardness of excavation objects.

The present invention has been made in view of the above problems. It is an object of the present invention to provide a work machine that is capable of appropriately setting a target locus and target postures for a work implement depending on an excavation environment and an excavation object under automatic excavation control.

### Means for Solving the Problems

In order to accomplish the above object, there is provided in accordance with the present invention a work machine including a work device having a work implement, hydraulic actuators for driving the work device, a hydraulic pump, a control valve for controlling a flow rate of a hydraulic fluid supplied from the hydraulic pump to the hydraulic actuators, and a controller configured to calculate a target locus for a control point on the work implement and control the control valve such that the control point moves on the target locus, in which the controller is configured to calculate a target locus passing through an excavation starting position where the control point is positioned when an excavation is started, an excavation-in-progress position where the control point is positioned when the excavation is in progress, and an excavation finishing position where the control point is positioned when the excavation is finished, and a target posture for the work implement at a time where the control point moves on the target locus, and control the control valve such that the control point moves on the target locus and that a posture of the work implement at the time where the control point moves on the target locus matches the target posture.

According to the present invention configured as above, since the target locus and target postures for the work implement are calculated such that the control point on the work implement passes through the excavation starting position, the excavation-in-progress position, and the excavation finishing position, it is possible to appropriate set a target locus and the target postures depending on an excavation environment and an excavation object.

### Advantages of the Invention

According to the present invention, under automatic excavation control of a work machine, it is possible to appropriately set a target locus and target postures for a work implement depending on an excavation environment and an excavation object.

### Brief Description of the Drawings

FIG. 1 is a view of the structure of a hydraulic excavator according to a first embodiment of the present invention.
FIG. 2 is a functional block diagram of a controller according to the first embodiment of the present invention.
FIG. 3A is a flowchart (1/2) of automatic operation control performed by the controller according to the first embodiment of the present invention.
FIG. 3B is a flowchart (2/2) of the automatic operation control performed by the controller according to the first embodiment of the present invention.
FIG. 4 is a flowchart of setting parameters depending on the gradient of an excavation surface, performed by the controller according to the first embodiment of the present invention.
FIG. 5 is a diagram of an excavation locus generated depending on the gradient of an excavation surface by the controller according to the first embodiment of the present invention.
FIG. 6 is a functional block diagram of a controller according to a second embodiment of the present invention.
FIG. 7 is a flowchart of setting parameters depending on the gradient of an excavation surface and the hardness of an excavation object, performed by the controller according to the second embodiment of the present invention.
FIG. 8 is a diagram of an excavation locus generated depending on the gradient of an excavation surface and the hardness of an excavation object, by the controller according to the second embodiment of the present invention.

### Modes for Carrying Out the Invention

Embodiments of the present invention will be described hereinbelow with reference to the drawings. A hydraulic excavator having a bucket as a work implement (attachment) on the distal end of a work device will be illustrated by way of example below. However, the present invention is applicable to work machines having an attachment other than a bucket. Furthermore, the present invention is also applicable to work machines other than hydraulic excavators insofar as they have a multi-joint work device made up of a plurality of links (attachments, arms, booms, etc.).

### [First Embodiment]

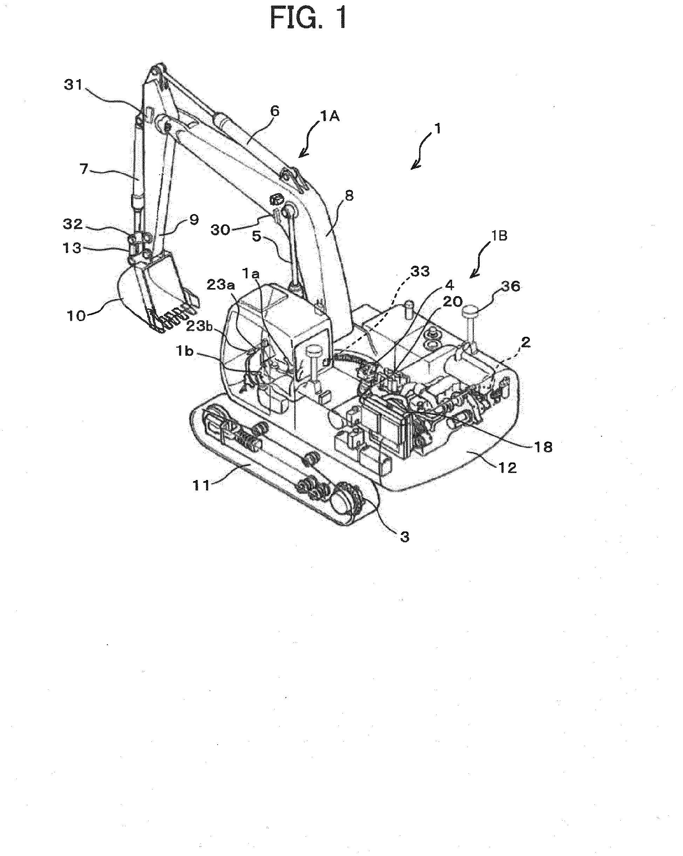

FIG. 1 is a view of the structure of a hydraulic excavator according to a first embodiment of the present invention. In FIG. 1, the hydraulic excavator 1 includes a multi-joint front work device 1A and a machine body 1B. The machine body 1B includes a lower track structure 11 traveled by left and right track hydraulic motors 3 (only left one is depicted) and an upper swing structure 12 mounted on the lower track structure 11 and swung by a swing hydraulic motor 4. The work device 1A is configured by a plurality of driven members (a boom 8, an arm 9, and a bucket 10) that individually vertically pivot and are coupled to each other. The boom 8 has a proximal end pivotally supported on a front portion of the upper swing structure 12 by a boom pin. The boom 8 has a distal end to which the arm 9 is pivotally coupled by an arm pin. The arm 9 has a distal end to which the bucket 10 is pivotally coupled by a bucket pin. The boom 8 is driven by a boom cylinder 5, the arm 9 is driven by an arm cylinder 6, and the bucket 10 is driven by a bucket cylinder 7.

An engine 18 that is mounted as a prime mover on the upper swing structure 12 drives a hydraulic pump 2. A hydraulic fluid delivered from the hydraulic pump 2 is supplied through a control valve 20 to the track hydraulic motors 3, the swing hydraulic motor 4, the boom cylinder 5, the arm cylinder 6, and the bucket cylinder 7. The control valve 20 is made up of a plurality of flow control valves for controlling the flow rates of the hydraulic fluid supplied to the hydraulic actuators 3 through 7. When the boom cylinder 5, the arm cylinder 6, and the bucket cylinder 7 are extended or contracted by the hydraulic fluid supplied thereto, the boom 8, the arm 9, and the bucket 10 pivot, changing the position and posture of the bucket 10. In addition, when the swing hydraulic motor 4 is rotated by the hydraulic fluid supplied thereto, the upper swing structure 12 swings with respect to the lower track structure 11. When track hydraulic motor 3 is rotated by the hydraulic fluid supplied thereto, the lower track structure 11 is traveled.

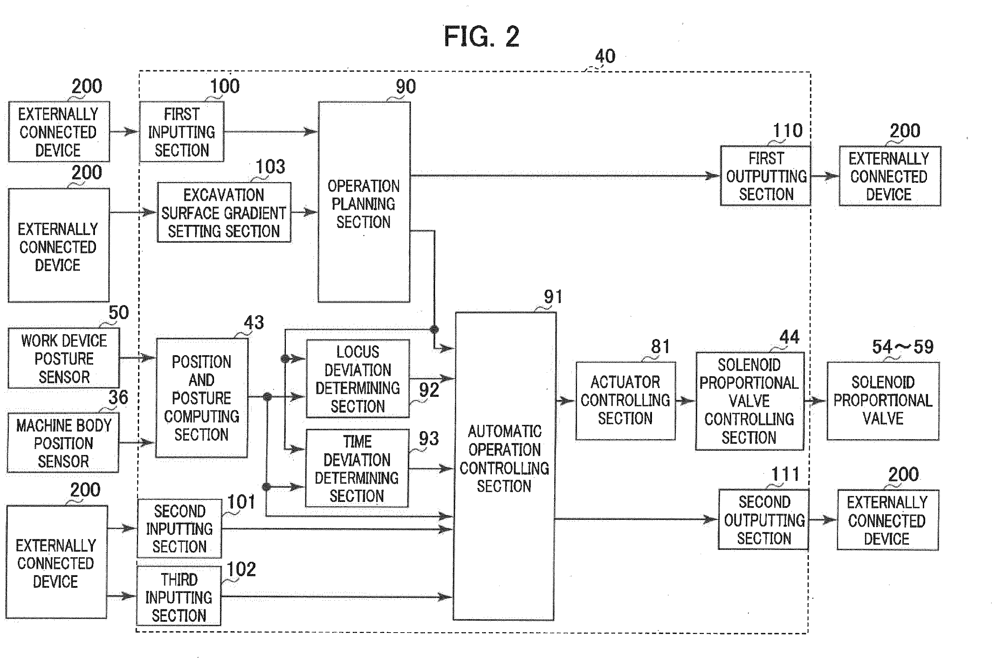

Under automatic operation control, the flow control valves for controlling the flow rates of the hydraulic fluid supplied to the boom cylinder 5, the arm cylinder 6, and the bucket cylinder 7 are driven by pilot hydraulic pressure signals from solenoid proportional valves 54 through 59 (depicted in FIG. 2), operating the track hydraulic motors 3, the swing hydraulic motor 4, the boom cylinder 5, the arm cylinder 6, and the bucket cylinder 7. The solenoid proportional valves 54 through 59 are controlled by control commands from a controller 40. Note that automatic operation control for an excavating operation may be referred to as automatic excavation control.

A boom angle sensor 30, an arm angle sensor 31, and a bucket angle sensor 32 are attached respectively to the boom 8, the arm 9, and the bucket 13 such that the pivot angles of the boom 8, the arm 9, and the bucket 10 can be measured. A machine body inclination angle sensor 33 for sensing the angle of inclination of the upper swing structure 12 (the machine body 1B) with respect to a reference plane (e.g., a horizontal plane) is mounted on the upper swing structure 12. Further, a machine body position sensor 36 for sensing the position of the machine body 1B is mounted on the upper swing structure 12.

A work device posture sensor 50 is configured by the boom angle sensor 30, the arm angle sensor 31, the bucket angle sensor 32, and the machine body inclination angle sensor 33. These angle sensors 30 through 33 function as posture sensors of the front work device 1A.

FIG. 2 is a functional block diagram of the controller 40. The controller 40 includes a position and posture computing section 43, a solenoid proportional valve controlling section 44, an actuator controlling section 81, an operation planning section 90, an automatic operation controlling section 91, a locus deviation determining section 92, a time deviation determining section 93, a first inputting section 100, a second inputting section 101, a third inputting section 102, an excavation surface gradient setting section 103, a first outputting section 110, and a second outputting section 111. The controller 40 is configured by a controller having a computation processing function, an input/output interface for sending signals to and receiving signals from external devices, etc., and performs the functions of the various sections by executing programs stored in a storage device such as a ROM.

To the first inputting section 100, there is inputted task information from an externally connected device 200.

To the second inputting section 101, there is inputted an approval signal or a disapproval signal from the externally connected device 200.

To the third inputting section 102, there is inputted a task suspension signal, a task resumption request signal, or a task aborting request signal from the externally connected device 200.

In the excavation surface gradient setting section 103, the gradient of an excavation surface is set that generally matches the gradient of terrain around a spot to be excavated by the front work device 1A, on the basis of information from the externally connected device 200. The information that is inputted from the externally connected device 200 to the excavation surface gradient setting section 103 may represent a result obtained when a person has visually confirmed the gradient of the terrain or a result obtained when a terrain measurement sensor or the like has measured the terrain.

The position and posture computing section 43 calculates the positional coordinates of the hydraulic excavator 1, the posture of the front work device 1A, and the position of the claw tip (control point) of the bucket 10 on the basis of information from the work device posture sensor 50 and the machine body position sensor 36.

The operation planning section 90 stores in advance therein a table of parameters to be used in computing a projected operation locus (target locus). The operation planning section 90 calculates projected positional coordinates for the hydraulic excavator 1 and a projected posture for the front work device 1A at each time from the start to end of a task, and a projected operation locus for the position of the claw tip of the bucket 10 on the basis of task information acquired from the first inputting section 100 and the information on the gradient of an excavation surface acquired from the excavation surface gradient setting section 103, and outputs the calculated projected positional coordinates, projected posture, and projected operation locus to the automatic operation controlling section 91, the locus deviation determining section 92, the time deviation determining section 93, and the first outputting section 110. The projected operation locus from an excavation starting position to an excavation finishing position may hereinbelow be referred to as an excavation locus.

The locus deviation determining section 92 determines whether an actual operation locus of the position of the claw tip of the bucket 10 deviates from the projected operation locus projected by the operation planning section 90 beyond a preset first allowable position error or not on the basis of the information on an operation plan from the operation planning section 90, the information on the present posture of the front work device 1A from the position and posture computing section 43, and the information on the position of the claw tip of the bucket 10, and outputs the determined result to the automatic operation controlling section 91.

The time deviation determining section 93 determines whether actual operations of the front work device 1A, the swing hydraulic motor 4, and the track hydraulic motors 3 deviate from operations planned by the operation planning section 90 beyond a first allowable time error or not on the basis of the information on the operation plan from the operation planning section 90 and the information on the present posture of the front work device 1A from the position and posture computing section 43, and outputs the determined result to the automatic operation controlling section 91.

The automatic operation controlling section 91 calculates speed commands for the respective hydraulic actuators on the basis of the information on the operation plan from the operation planning section 90 only if the signal from the second inputting section 101 is an approval signal, and outputs the calculated speed commands to the actuator controlling section 81. If the locus deviation determining section 92 determines the deviation of the locus or if the time deviation determining section 93 determines the deviation of the operation times while the task is being executed, then the automatic operation controlling section 91 finishes the execution of the task and outputs an abnormal finish signal to the second outputting section 111. If the signal from the third inputting section 102 is a task suspension request signal, then the automatic operation controlling section 91 suspends the execution of the task and outputs a task suspension signal to the second outputting section 111. If the automatic operation controlling section 91 acquires a task resumption request signal from the third inputting section 102 while the task is being suspended, then the automatic operation controlling section 91 resumptions the execution of the task. If the automatic operation controlling section 91 acquires a task aborting request signal from the third inputting section 102, the automatic operation controlling section 91 finishes the execution of the task and outputs an aborting signal to the second outputting section 111. If the task is completed without deviating from the projected operation locus and the operation times, the automatic operation controlling section 91 outputs a normal finishing signal.

The actuator controlling section 81 calculates target pilot pressures for the flow control valves of the hydraulic actuators 3 through 7 on the basis of the speed commands for the respective hydraulic actuators 3 through 7 that are outputted from the automatic operation controlling section 91, and outputs the computed target pilot pressures to the solenoid proportional valve controlling section 44.

The solenoid proportional valve controlling section 44 calculates commands for the respective solenoid proportional valves 54 through 59 on the basis of the target pilot pressures for the respective flow control valves that are outputted from the actuator controlling section 81.

The first outputting section 110 outputs the information on the operation plan outputted from the operation planning section 90, to the externally connected device 200.

The second outputting section 11 outputs the normal finish signal, the abnormal finish signal, the suspension signal, or the aborting signal outputted from the automatic operation controlling section 91, to the externally connected device 200.

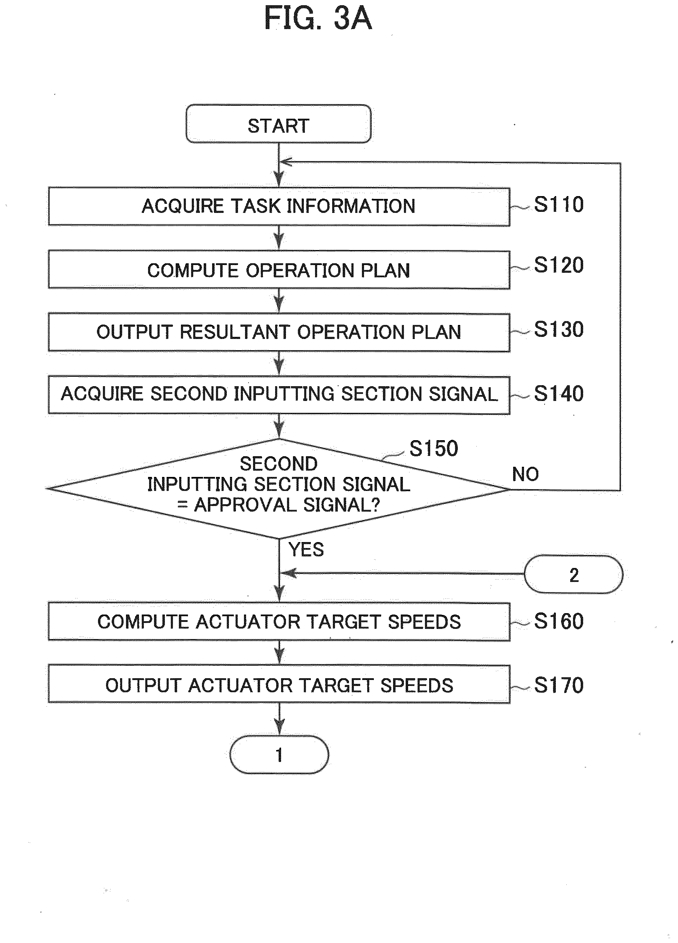

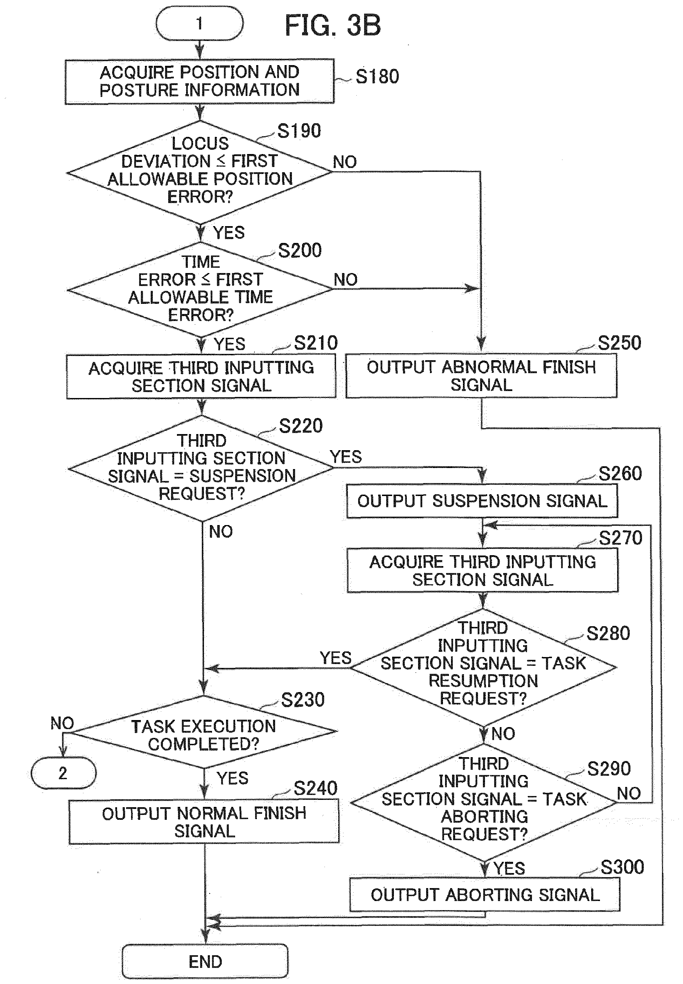

FIGS. 3A and 3B are a flowchart of automatic operation control performed by the controller 40. Steps of the automatic operation control will successively be described hereinbelow.

In step S110, the first inputting section 110 acquires task information inputted from the externally connecting device 200.

In step S120, the operation planning section 90 calculates a projected operation locus of the hydraulic excavator 1 at each time from the start to end of a task, i.e., projected positional coordinates for the hydraulic excavator 1 and a projected posture (target posture) for the front work device 1A, on the basis of the task information acquired in step S110.

In step S130, the first outputting section 110 outputs the resultant operation plan computed in step S120 to the externally connecting device 200.

In step S140, the second inputting section 101 acquires an approval signal or a disapproval signal from the externally connected device 200.

In step S150, the automatic operation controlling section 91 determines whether the signal acquired from the second inputting section 101 in step S140 is an approval signal or not. If the signal acquired from the second inputting section 101 is determined as an approval signal in step S150, then control goes to step S160. If the signal acquired from the second inputting section 101 is determined as not an approval signal in step S150, then control goes to step S110.

In step S160, the actuator controlling section 81 calculates target speeds for the respective hydraulic actuators 3 through 7 from the resultant operation plan computed in step S120.

In step S170, the actuator controlling section 81 outputs the target speeds for the respective hydraulic actuators 3 through 7 computed in step S160 to the solenoid proportional valve controlling section 44.

In step S180, the locus deviation determining section 92 and the time deviation determining section 93 acquire the positional coordinates of the hydraulic excavator 1, the posture of the front work device 1A, and the position of the claw tip of the bucket 10 computed by the position and posture computing section 43.

In step S190, the locus deviation determining section 92 determines whether or not the deviation of the present position of the claw tip of the bucket 10 from the projected operation locus computed by the operation planning section 90 is equal to or smaller than the first allowable position error, from the information on the position and the posture acquired in step S180. If it is determined in step S190 that the deviation is equal to or smaller than the first allowable position error, then control goes to step S200. If it is determined in step S190 that the deviation is larger than the first allowable position error, then control goes to step S250.

In step S200, the time deviation determining section 93 determines whether or not the deviation of the present positional coordinates of the hydraulic excavator 1 and the present posture of the front work device 1A from the projected positional coordinates of the hydraulic excavator 1 and the projected posture of the front work device 1A at each time computed by the operation planning section 90 is equal to or smaller than the first allowable time error, from the information on the position and the posture acquired in step S180. If it is determined in step S200 that the deviation is equal to or smaller than the first allowable time error, then control goes to step S210. If it is determined in step S200 that the deviation is larger than the first allowable time error, then control goes to step S250.

In step S210, the third inputting section 102 acquires a signal from the externally connected device 200.

In step S220, the automatic operation controlling section 91 determines whether the signal acquired from the third inputting section 102 in step S210 is a task suspension request signal or not. If it is determined in step S220 that the signal acquired from the third inputting section 102 is a task suspension request signal, then control goes to step S260. If it is determined in step S220 that the signal acquired from the third inputting section 102 is other than a task suspension request signal, then control goes to step S230.

In step S230, the automatic operation controlling section 91 determines whether the execution of the task based on the operation plan computed in step S120 has been completed or not. If it is determined in step S230 that the execution of the task has been completed, then control goes to step S240. If it is determined in step S230 that the execution of the task has not been completed, then control goes to step S160.

In step S240, the second outputting section 111 outputs a normal finish signal to the externally connected device 200.

In step S250, the second outputting section 111 outputs an abnormal finish signal to the externally connected device 200.

In step S260, the second outputting section 111 outputs a suspension signal to the externally connected device 200.

In step S270, the third inputting section 102 acquires a signal from the externally connected device 200.

In step S280, the automatic operation controlling section 91 determines whether the signal acquired from the third inputting section 102 in step S270 is a task resumption request signal or not. If it is determined in step S280 that the signal acquired from the third inputting section 102 is a task resumption request signal, then control goes to step S230. If it is determined in step S280 that the signal acquired from the third inputting section 102 is other than a task resumption request, then control goes to step S290.

In step S290, the automatic operation controlling section 91 determines whether the signal acquired from the third inputting section 102 in step S270 is a task aborting request signal or not. If it is determined in step S290 that the signal acquired from the third inputting section 102 is a task aborting request signal, then control goes to step S300. If it is determined in step S290 that the signal acquired from the third inputting section 102 is other than a task aborting request, then control goes to step S270.

In step S300, the second outputting section 111 outputs an aborting signal to the externally connected device 200.

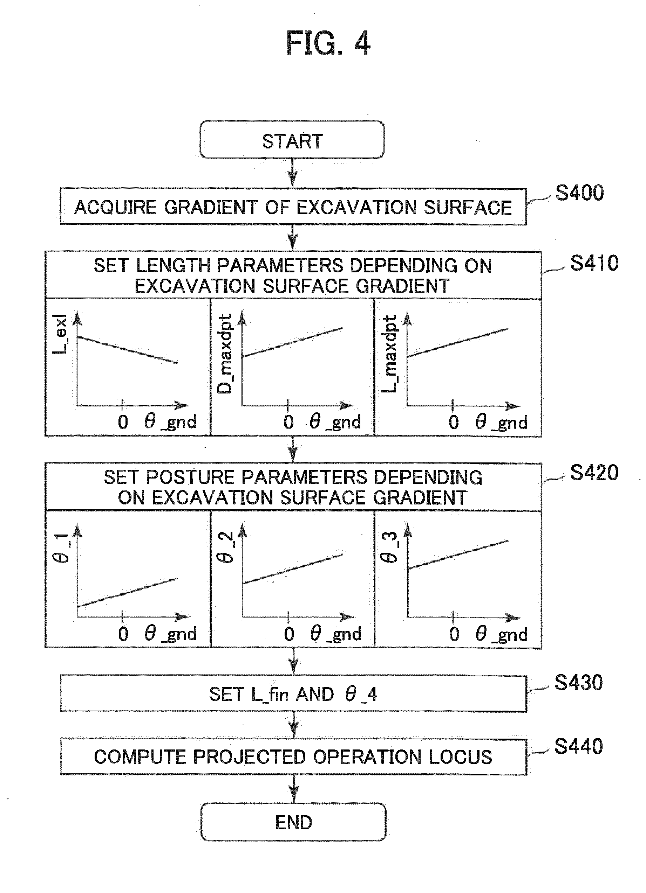

FIG. 4 is a flowchart of setting parameters depending on the gradient of an excavation surface, performed by the operation planning section 90. The parameters referred to herein represent the distance (excavation distance) from an excavation starting position to an excavation finishing position, a maximum excavation depth, a maximum excavation depth position, an operation finishing position, and postures of the bucket 10 at the respective positions, used in calculating a projected operation locus for the position of the claw tip of the bucket 10. Steps of the setting parameters will successively be described hereinbelow.

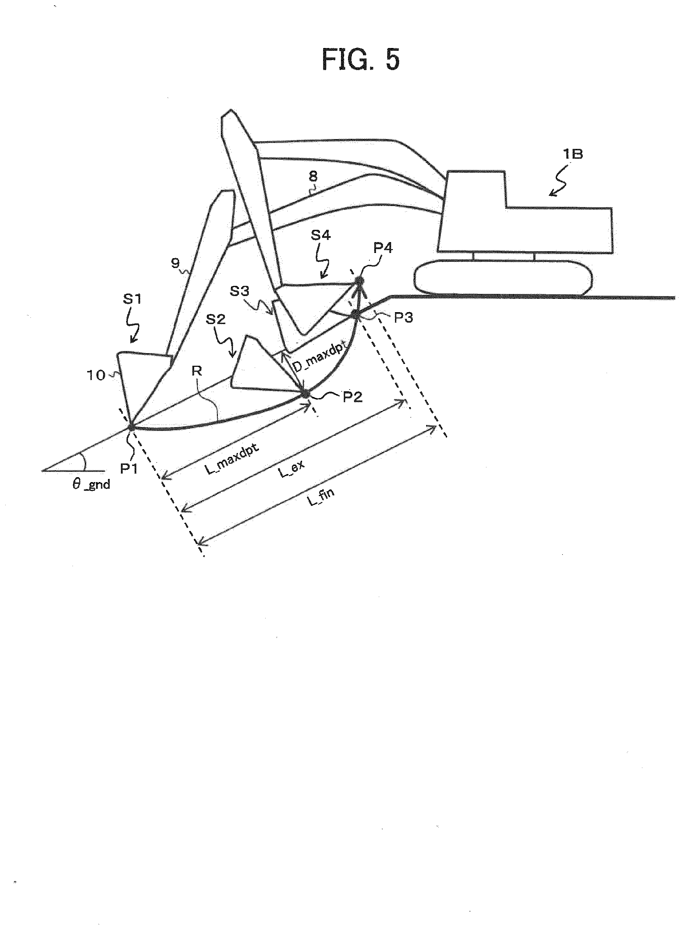

In step S400, the excavation surface gradient setting section 103 sets a gradient θ_gnd of an excavation surface that generally matches the gradient of terrain around a spot to be excavated by the front work device 1A on the basis of information from the externally connected device 200. The gradient θ_gnd of the excavation surface according to the present embodiment is defined as being positive if the excavation surface slopes downwardly when viewed from the machine body 1B (as depicted in FIG. 5) and is defined as being negative if the excavation surface slopes upwardly when viewed from the machine body 1B.

In step S410, the operation planning section 90 sets parameters regarding lengths in the computation of a projected operation locus depending on the gradient θ_gnd of the excavation surface set in step S400. Specifically, the operation planning section 90 sets an excavation distance L_ex from the excavation starting position, a maximum excavation depth D_maxdpt, and a distance L_maxdpt in a direction along the excavation surface up to the maximum excavation depth position.

In step S420, the operation planning section 90 sets parameters regarding postures in the computation of a projected operation locus depending on the gradient θ_gnd of the excavation surface set in step S400. Specifically, the operation planning section 90 sets a posture θ_1 of the bucket 10 in the excavation starting position, a posture θ_2 of the bucket 10 in the maximum excavation depth position, and a posture θ_3 of the bucket 10 in the excavation finishing position. The postures θ_1 through θ_3 of the bucket 10 according to the present embodiment are defined as being positive when the bucket 10 is displaced for crowding (counterclockwise in FIG. 5) and is defined as being negative when the bucket 10 is displaced for dumping (clockwise in FIG. 5).

In step S430, the operation planning section 90 sets parameters independent of the gradient θ_gnd of the excavation surface in the computation of a projected operation locus. Specifically, the operation planning section 90 sets a distance L_fin in the direction along the excavation surface up to the operation finishing position and a posture θ_4 of the bucket 10 in the operation finishing position.

In step S440, based on the excavation starting position, the maximum excavation depth position, the excavation finishing position, and the operation finishing position that are determined from the parameters set in step S410, S420, and S430, and the postures of the bucket 10 in the respective positions, the operation planning section 90 computes a projected operation locus that smoothly interconnects the positions and the postures.

The method of setting parameters illustrated in FIG. 4 is by way of example only. Parameters may be set depending on the gradient θ_gnd of the excavation surface according to another method. Alternatively, the positions and the postures of the bucket 10 in the respective positions may be set directly depending on the gradient θ_gnd of the excavation surface without the intermediary of parameters.

A projected operation locus that smoothly interconnects the positions and the postures may be calculated using an interpolation such as Lagrange interpolation, Bezier interpolation, Hermite interpolation, or spline interpolation. However, other methods may be used to calculate a projected operation locus.

An excavation locus generated depending on the gradient θ_gnd of an excavation surface for the hydraulic excavator 1 configured as described above is illustrated in FIG. 5.

The administrator or administrative system inputs task information and the gradient θ_gnd of an excavation surface. The operation planning section 90 draws up an operation plan based on the task information and the gradient θ_gnd of the excavation surface that have been inputted. Specifically, the operation planning section 90 calculates projected positional coordinates for the hydraulic excavator 1 and a projected posture for the front work device 1A at each time from the start to end of the task, and a projected operation locus for the position of the claw tip of the bucket 10. In generating an excavation operation locus during the computation of the projected operation locus, the operation planning section 90 computes the projected operation locus depending on the gradient θ_gnd of the excavation surface. Since the excavation surface slopes downwardly away from the machine body 1B in FIG. 5, the excavation distance L_ex is set to be shorter, the maximum excavation depth D_maxdpt is set to be deeper, and the distance L_maxdpt in the direction along the excavation surface up to the maximum excavation depth position is set to be longer than if the excavation surface does not slope, i.e., θ_gnd = 0, in step S410. Similarly, the posture θ_1 of the bucket 10 in the excavation starting position, the posture θ_2 of the bucket 10 in the maximum excavation depth position, and the posture θ_3 of the bucket 10 in the excavation finishing position are set to be larger than if θ_gnd = 0, in step S420. In step S430, the distance L_fin in the direction along the excavation surface up to the operation finishing position and the posture θ_4 of the bucket 10 in the operation finishing position are not depending on the gradient θ_gnd of the excavation surface, and the posture θ_4 of the bucket 10 in the operation finishing position is set depending on the gravitational direction. The posture θ_4 referred to above represents a posture where the straight line interconnecting the bucket pin and the claw tip of the bucket extends generally horizontally, for example. In this manner, the positions P1 through P4 of the claw tip of the bucket 10 respectively in a state S1 (excavation starting state), a state S2 (maximum excavation depth state), a state S3 (excavation finishing state), and a state S4 (operation finishing state) in FIG. 5 and the postures of the bucket 10 are determined. A projected operation focus R (target locus) is calculated in step S440 such that the projected operation focus R smoothly interconnects the positions P1 through P4.

The resultant operation plan is outputted from the first outputting section 110, and presented via the externally connected device 200 to the administrator or administrative system. If there is no problem with the resultant operation plan, then the administrator or administrative system inputs an approval signal to the second inputting section 101, whereupon YES is determined in step S150 in FIG. 3.

Then, based on the projected operation locus R, the automatic operation controlling section 91 calculates speed commands for the respective hydraulic actuators 3 through 7, the actuator controlling section 81 calculates target pilot pressures for the flow control valves of the respective hydraulic actuators 3 through 7, and the solenoid proportional valves 54 through 59 are actually driven by control signals from the solenoid proportional valve controlling section 44, thereby an automatic operation is executed. While the automatic operation is being performed, in step S190 illustrated in FIG. 3, it is determined whether or not the deviation of the present position of the claw tip of the bucket 10 from the projected operation locus R computed by the operation planning section 90 is equal to or smaller than the first allowable position error, and in step S200 illustrated in FIG. 3, it is determined whether or not the deviation of the present positional coordinates of the hydraulic excavator 1 and the present posture of the front work device 1A from the projected positional coordinates of the hydraulic excavator 1 and the projected posture of the front work device 1A at each time computed by the operation planning section 90 is equal to or smaller than the first allowable time error. If the automatic operation is performed according to the operation plan, then YES is determined in step S190 and step S200. However, the automatic operation may not be performed according to the operation plan because of the nature of the soil being excavated or the like. In such a case, NO is determined in step S190 or step S200 in FIG. 3, and the second outputting section 111 outputs an abnormal finish signal to let the administrator or administrative system know that the task is having an abnormal finish, whereupon the execution of the task is finished. In this manner, it is possible to prevent an operation from being performed that the administrator or administrative system has not approved of.

If the automatic operation of the hydraulic excavator 1 is to be suspended for some reasons while it is executing a task, then the administrator or administrative system inputs a task suspension request signal to the third inputting section 102. In this case, YES is determined in step S220 illustrated in FIG. 3, and the second outputting section 111 outputs a suspension signal to the administrator or administrative system, whereupon the execution of the task is suspended.

If the execution of a task is to be resumed while the task is being suspended, then the administrator or administrative system inputs a task resumption request signal to the third inputting section 102. In this case, YES is determined in step S280 illustrated in FIG. 3, and the execution of the task is resumed. If the execution of a task is to be aborted while the task is being suspended, then the administrator or administrative system inputs a task aborting request signal to the third inputting section 102. In this case, YES is determined in step S290 illustrated in FIG. 3, and the second outputting section 111 outputs an aborting signal to let the administrator or administrative system know that the task is being aborted, whereupon the execution of the task is finished.

If the execution of a task is completed, then YES is determined in step S230 illustrated in FIG. 3, and the second outputting section 111 outputs a normal finish signal to let the administrator or administrative system know that the task is being normally finished, whereupon the execution of the task is finished.

The hydraulic excavator configured as described above is capable of generating appropriate excavation loci with respect to the gradients θ_gnd of various excavation surfaces and performing automatic operations.

### (Conclusions)

According to the present embodiment, the work machine 1 includes the work device 1A having the work implement 10, the hydraulic actuators 5 through 7 for driving the work device 1A, the hydraulic pump 2, the control valve 20 for controlling the flow rate of a hydraulic fluid supplied from the hydraulic pump 2 to the hydraulic actuators 5 through 7, and the controller 40 for calculating a target locus R for a control point on the work implement 10 (e.g., the position of the claw tip of the bucket 10) and controlling the control valve 20 such that the control point moves on the target locus R. In the work machine 1, the controller 40 calculates a target locus R passing through the excavation starting position P1 where the control point is positioned when an excavation is started, the excavation-in-progress position P2 where the control point is positioned when the excavation is in progress, and the excavation finishing position P3 where the control point is positioned when the excavation is finished, and the target posture for the work implement 10 at the time where the control point moves on the target locus R, and controls the control valve 20 such that the control point moves on the target locus R and that the posture of the work implement 10 at the time where the control point moves on the target locus R matches the target posture.

According to the present embodiment thus configured, since the target locus R and the target postures θ_1 through θ_3 for the work implement 10 are calculated such that the control point on the work implement 10 moves through the excavation starting position P1, the excavation-in-progress position P2, and the excavation finishing position P3, it is possible to appropriately set the target locus R and the target postures θ_1 through θ_3 depending on an excavation environment and an excavation object.

Furthermore, the excavation-in-progress position P2 according to the present embodiment refers to a maximum excavation depth position that is deepest from the ground surface on the target locus R. As the target locus is thus calculated so as to pass through the points positioned on the ground surface (the excavation starting position P1 and the excavation finishing position P3) and the point deepest from the ground surface (the excavation-in-progress position P2), it is possible to set a target locus more appropriately.

Moreover, the controller 40 according to the present embodiment calculates the target locus R such that it passes through the operation finishing position P4 where the control point is positioned when the excavating operation is finished, in addition to the excavation starting position P1, the excavation-in-progress position P2, and the excavation finishing position P3. It is thus possible to control a series of operations until the excavated soil is scooped by the work implement 10, on the basis of the target locus.

In addition, the controller 40 according to the present embodiment calculates the target posture θ_4 for the work implement 10 in the operation finishing position P4 on the basis of the gravitational direction. It is thus possible to prevent the soil scooped by the work implement 10 from being spilled from the work implement 10.

Furthermore, the work machine 1 according to the present embodiment includes the externally connected device 200 from which the gradient θ_gnd of the excavation surface is inputted to the controller 40. The controller 40 sets the excavation starting position P1, the excavation-in-progress position P2, and the excavation finishing position P3 depending on the gradient θ_gnd of the excavation surface. It is thus possible to appropriately set the excavation starting position P1, the excavation-in-progress position P2, and the excavation finishing position P3 depending on the gradient θ_gnd of the excavation surface.

Moreover, the controller 40 according to the present embodiment calculates the target posture θ_1 in the excavation starting position P1, the target posture θ_2 in the maximum excavation depth position P2, the target posture θ_3 in the excavation finishing position P3 depending on the gradient θ_gnd of the excavation surface. It is thus possible to appropriately set the target postures θ_1 through θ_3 for the work implement 10 respectively in the excavation starting position P1, the maximum excavation depth position P2, and the excavation finishing position P3 depending on the gradient θ_gnd of the excavation surface.

Furthermore, the controller 40 according to the present embodiment sets the maximum excavation depth position P2 such that it becomes closer to excavation starting position P1 as the downward gradient of the excavation surface is smaller or the upward gradient of the excavation surface is greater, sets the maximum excavation depth position P2 such that it becomes closer to excavation finishing position P1 as the upward gradient of the excavation surface is smaller or the downward gradient of the excavation surface is greater, sets the maximum excavation depth position P2 to a position shallower from the ground surface as the downward gradient of the excavation surface is smaller or the upward gradient of the excavation surface is greater, and sets the maximum excavation depth position P2 to a position deeper from the ground surface as the upward gradient of the excavation surface is smaller or the downward gradient of the excavation surface is greater. It is thus possible to set a target locus for a higher excavation efficiency.

In addition, the controller 40 according to the present embodiment sets the excavation starting position P1 and the excavation finishing position P3 so as to make the distance (excavation distance L_ex) from the excavation starting position P1 to the excavation finishing position P3 smaller as the upward gradient of the excavation surface is smaller or the downward gradient of the excavation surface is greater. It is thus possible to adjust the excavation distance L_ex depending on the gradient θ_gnd of the excavation surface.

### [Second Embodiment]

A second embodiment of the present invention will be described below primarily with respect to its differences from the first embodiment.

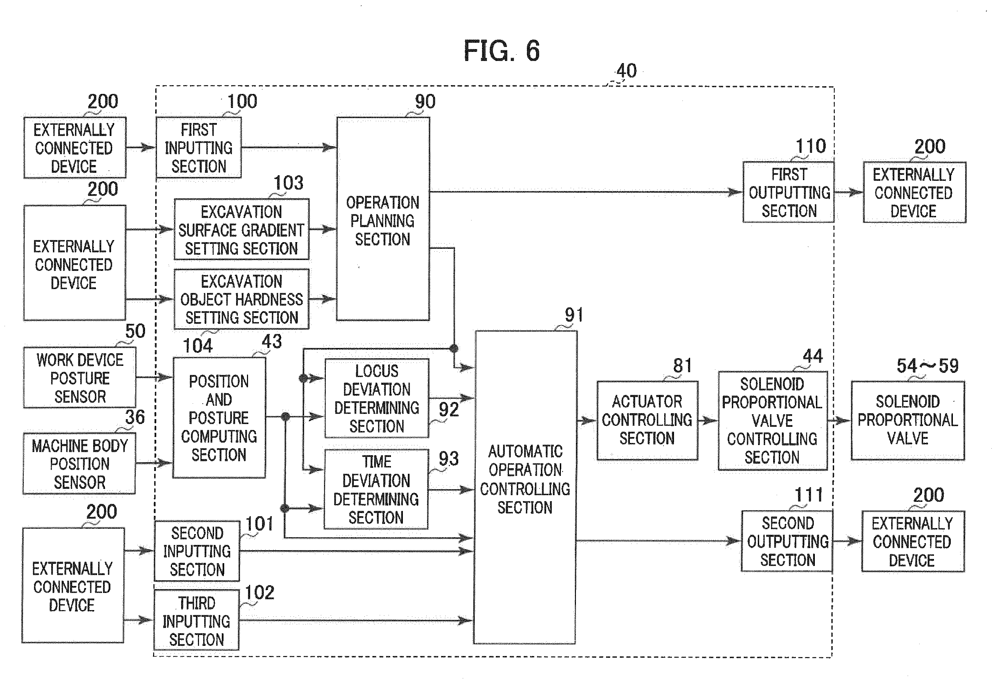

FIG. 6 is a functional block diagram of a controller 40 according to the present embodiment. The controller 40 includes a position and posture computing section 43, a solenoid proportional valve controlling section 44, an actuator controlling section 81, an operation planning section 90, an automatic operation controlling section 91, a locus deviation determining section 92, a time deviation determining section 93, a first inputting section 100, a second inputting section 101, a third inputting section 102, an excavation surface gradient setting section 103, an excavation object hardness setting section 104, a first outputting section 110, and a second outputting section 111.

The excavation object hardness setting section 104 sets the hardness of an excavation object on the basis of information from the externally connected device 200. The information that is inputted from the externally connected device 200 to the excavation object hardness setting section 104 may represent a result obtained when a person has visually confirmed the excavation object or a result obtained when a sensor or the like has measured the excavation object.

The operation planning section 90 stores in advance therein a table of parameters to be used in computing a projected operation locus R. The operation planning section 90 calculates projected positional coordinates for the hydraulic excavator 1 and a projected posture for the front work device 1A at each time from the start to end of a task, and a projected operation locus R for the position of the claw tip of the bucket 10 on the basis of task information acquired from the first inputting section 100, the information on the gradient of an excavation surface acquired from the excavation surface gradient setting section 103, and the information on the hardness of an excavation object acquired from the excavation object hardness setting section 104, and outputs the calculated projected positional coordinates, projected posture, and projected operation locus R to the automatic operation controlling section 91, the locus deviation determining section 92, the time deviation determining section 93, and the first outputting section 110.

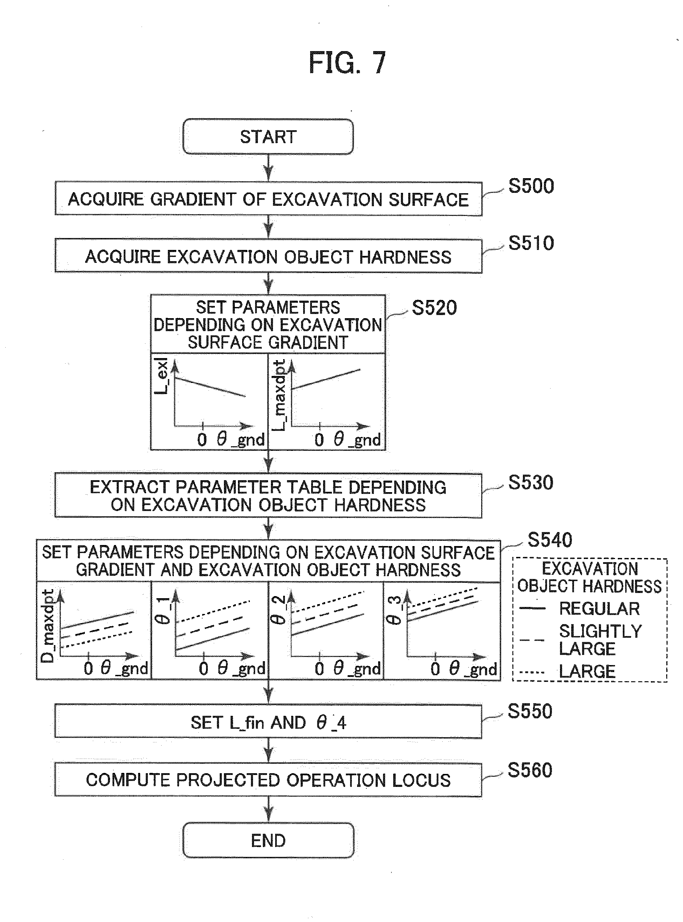

FIG. 7 is a flowchart of setting parameters depending on the gradient θ_gnd of an excavation surface and the hardness H_gnd of an excavation object, performed by the controller 40. The parameters referred to herein represent the distance (excavation distance L_ex) from an excavation starting position P1 to an excavation finishing position P3, a maximum excavation depth D_maxdpt, a maximum excavation depth position P2, an operation finishing position P4, and the postures θ_1 through θ_4 of the bucket 10 at the respective positions, used in calculating a projected operation locus R for the position of the claw tip of the bucket 10. Steps of setting parameters will successively be described hereinbelow.

In step S500, the excavation surface gradient setting section 103 sets a gradient θ_gnd of an excavation surface that generally matches the gradient of terrain around a spot to be excavated by the front work device 1A on the basis of information from the externally connected device 200.

In step S510, the excavation object hardness setting section 104 sets a hardness H_gnd of an excavation object around the spot to be excavated by the front work device 1A on the basis of information from the externally connected device 200.

In step S520, the operation planning section 90 sets those parameters to be determined depending on only the gradient θ_gnd of the excavation surface set in step S500, among parameters regarding lengths in the computation of a projected operation locus R. Specifically, the operation planning section 90 sets an excavation distance L_ex from the excavation starting position P1 and a distance L_maxdpt in a direction along the excavation surface up to the maximum excavation depth position P2.

In step S530, the operation planning section 90 extracts a table to be used depending on the hardness H_gnd of the excavation object set in step S510 from tables stored in advance in the operation planning section 90 with respect to maximum excavation depths D_maxdpt, postures θ_1 of the bucket 10 in the excavation starting position P1, postures θ_2 of the bucket 10 in the maximum excavation depth position P2, and postures θ_3 of the bucket 10 in the excavation finishing position P3.

In step S540, the operation planning section 90 sets those parameters that are to be determined depending on both the gradient θ_gnd of the excavation surface set in step S500 and the hardness H_gnd of the excavation object set in step S510, among parameters regarding postures in the computation of a projected operation locus R. Specifically, the operation planning section 90 sets a maximum excavation depth D_maxdpt, a posture θ_1 of the bucket 10 in the excavation starting position P1, a posture θ_2 of the bucket 10 in the maximum excavation depth position P2, and a posture θ_3 of the bucket 10 in the excavation finishing position P3. The operation planning section 90 can select parameters taking into account both the gradient θ_gnd of the excavation surface and the hardness H_gnd of the excavation object by selecting the table to be used depending on the hardness H_gnd of the excavation object in step S530 and setting parameters depending on the gradient θ_gnd of the excavation surface from the table in step S540. In the example illustrated in FIG. 7, the operation planning section 90 selects a table from among three tables (indicated respectively by the solid lines, broken lines, and dotted lines) where the hardness H_gnd is regular, slightly larger, and larger, respectively. As illustrated in FIG. 7, even though the gradient θ_gnd of the excavation surface remains the same, the larger the hardness H_gnd becomes, the smaller the maximum excavation depth D_maxdpt becomes, and the larger the postures θ_1 through θ_4 of the bucket 10 become.

In step S550, the operation planning section 90 sets parameters independent of the gradient θ_gnd of the excavation surface or the hardness H_gnd of the excavation object in the computation of a projected operation locus R. Specifically, the operation planning section 90 sets a distance L_fin in the direction along the excavation surface up to the operation finishing position P4 and a posture θ_4 of the bucket 10 in the operation finishing position P4.

In step S560, based on the excavation starting position P1, the maximum excavation depth position P2, the excavation finishing position P3, and the operation finishing position P4 that are determined from the parameters set in step S520, S540, and S550, and the postures θ_1 through θ_4 of the bucket 10 in the respective positions, the operation planning section 90 calculates a projected operation locus R such that the positions and the postures are smoothly interconnected.

The method of setting parameters illustrated in FIG. 7 is by way of example only. Parameters may be set depending on the gradient θ_gnd of the excavation surface and the hardness H_gnd of the excavation object according to another method. Alternatively, the positions and the postures of the bucket 10 in the respective positions may be set directly depending on the gradient θ_gnd of the excavation surface and the hardness H_gnd of the excavation object without the intermediary of parameters.

A projected operation locus R that smoothly interconnects the positions and the postures may be calculated using an interpolation such as Lagrange interpolation, Bezier interpolation, Hermite interpolation, or spline interpolation, for example. However, other methods may be used to calculate a projected operation locus R.

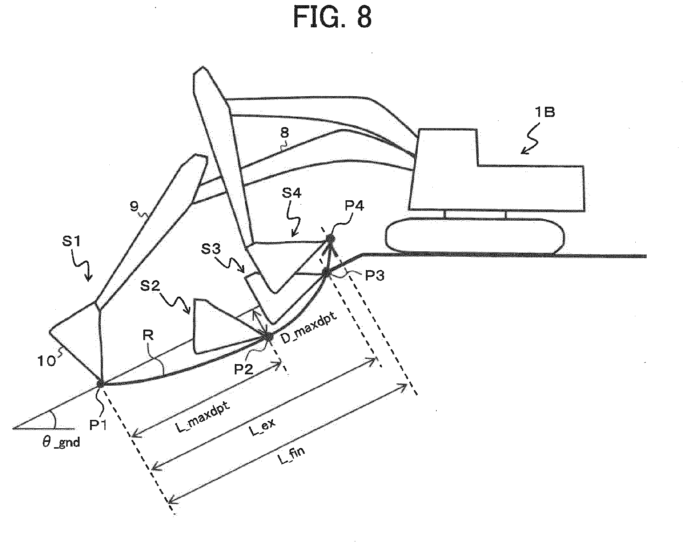

An excavation locus generated depending on the gradient θ_gnd of an excavation surface and the hardness H_gnd of the excavation object for the hydraulic excavator 1 configured as described above is illustrated in FIG. 8. In FIG. 8, it is assumed that the hardness H_gnd of a ground surface around the spot to be excavated by the front work device 1A is large.

The administrator or administrative system inputs task information, the gradient θ_gnd of an excavation surface, and the hardness H_gnd of an excavation object. The operation planning section 90 draws up an operation plan based on the task information, the gradient θ_gnd of the excavation surface, and the hardness H_gnd of the excavation object that have been inputted. Specifically, the operation planning section 90 calculates projected positional coordinates for the hydraulic excavator 1 and a projected posture for the front work device 1A at each time from the start to end of the task, and a projected operation locus R for the position of the claw tip of the bucket 10.

In generating an excavation operation locus during the computation of the projected operation locus R, the operation planning section 90 calculates the projected operation locus R depending on the gradient θ_gnd of the excavation surface and the hardness H_gnd of the excavation object. Since the excavation surface slopes downwardly away from the machine body 1B in FIG. 8, the excavation distance L_ex is set to be shorter and the distance L_maxdpt in the direction along the excavation surface up to the maximum excavation depth position P2 is set to be longer than if the excavation surface does not slope, i.e., θ_gnd = 0, in step S520.

With respect to the parameters of the maximum excavation depth D_maxdpt, the posture θ_1 of the bucket 10 in the excavation starting position P1, the posture θ_2 of the bucket 10 in the maximum excavation depth position P2, and the posture θ_3 of the bucket 10 in the excavation finishing position P3, since the hardness H_gnd of the excavation object is larger, the tables depending on the hardness H_gnd of the excavation object are extracted from among the parameter tables stored in advance in the operation planning section 90, in step S530. At this time, compared with the table where the hardness H_gnd is regular, a table where the maximum excavation depth D_maxdpt is smaller is extracted, a table where the bottom surface of the bucket 10 is closer in orientation to a line tangential to the target locus is extracted with respect to the posture θ_1 of the bucket 10 in the excavation starting position P1, a table where the bottom surface of the bucket 10 is closer in orientation to a line tangential to the target locus is extracted with respect to the posture θ_2 of the bucket 10 in the maximum excavation depth position P2, and a table where the bottom surface of the bucket 10 is closer in orientation to a line tangential to the target locus is extracted with respect to the posture θ_3 of the bucket 10 in the excavation finishing position P3.

From the tables extracted in step S540, the maximum excavation depth D_maxdpt is set to be deeper than that when θ_gnd = 0, the posture θ_1 of the bucket 10 in the excavation starting position P1 is set to be larger than that when θ_gnd = 0, the posture of the bucket 10 in the maximum excavation depth position P2 is set to be larger than that when θ_gnd = 0, and the posture of the bucket 10 in the excavation finishing position P3 is set to be larger than that when θ_gnd = 0.

In step S550, the distance L_fin in the direction along the excavation surface up to the operation finishing position P4 and the posture θ_4 of the bucket 10 in the operation finishing position P4 are not depending on the gradient θ_gnd of the excavation surface, and the posture θ_4 of the bucket 10 in the operation finishing position P4 is set depending on the gravitational direction. In this manner, the positions of the claw tip of the bucket 10 and the postures of the bucket 10 respectively in a state S1 (excavation starting state), a state S2 (maximum excavation depth state), a state S3 (excavation finishing state), and a state S4 (operation finishing state) in FIG. 8 are determined. A projected operation focus R that smoothly interconnects the positions P1 through P4 is calculated in step S560.

### (Conclusions)

The work machine 1 according to the present embodiment includes the externally connected device 200 from which the hardness H_gnd of the excavation object is inputted to the controller 40. The controller 40 sets the maximum excavation depth position P2 depending on the hardness H_gnd of the excavation object.

According to the present embodiment configured as described above, it is possible to appropriately set the maximum excavation depth position P2 that is deepest from the ground surface on the target locus R, depending on the hardness H_gnd of the excavation object under automatic excavation control.

Furthermore, the controller 40 according to the present embodiment calculates the target posture θ_1 in the excavation starting position P1, the target posture θ_2 in the maximum excavation depth position P2, and the target posture θ_3 in the excavation finishing position P3 depending on the hardness H_gnd of the excavation object. It is thus possible to appropriately set the target postures θ_1 through θ_3 for the work implement 10 respectively in the excavation starting position P1, the maximum excavation depth position P2, and the excavation finishing position P3 depending on the hardness H_gnd of the excavation object.

Moreover, the controller 40 according to the present embodiment calculates the target postures θ_1 through θ_3 such that the bottom surface of the work implement 10 is closer in orientation to a line tangential to the target locus R as the hardness H_gnd of the excavation object is larger. It is thus possible to excavate the excavation object accurately along the target locus even if the excavation object is harder than usual.

Furthermore, the externally connected device 200 according to the present embodiment inputs the gradient θ_gnd of the excavation surface to the controller 40, and the controller 40 sets the maximum excavation depth position P2 such that it becomes closer to the excavation starting position P1 as the downward gradient of the excavation surface is smaller or the upward gradient of the excavation surface is greater, sets the maximum excavation depth position P2 such that it becomes closer to the excavation finishing position P3 as the upward gradient of the excavation surface is smaller or the downward gradient of the excavation surface is greater, sets the maximum excavation depth position P2 to a position shallower from the ground surface as the hardness H_gnd of the excavation object is larger, sets the maximum excavation depth position P2 to a position deeper from the ground surface as the hardness H_gnd of the excavation object is smaller, sets the maximum excavation depth position P2 to a position shallower from the ground surface as the downward gradient of the excavation surface is smaller or the upward gradient of the excavation surface is greater, and sets the maximum excavation depth position P2 to a position deeper from the ground surface as the upward gradient of the excavation surface is smaller or the downward gradient of the excavation surface is greater. It is thus possible to appropriately set the maximum excavation depth position P2 depending on the gradient of the excavation surface and the hardness H_gnd of the excavation object.

The embodiments of the present invention have been described in detail above. However, the present invention is not limited to the embodiments described above, but covers various changes and modifications therein. For example, the above embodiments have been described in detail for an easier understanding of the present invention, and the present invention should not be limited to that including all the configurations described above. Some of the configurations of one of the embodiments may be added to some of the configurations of the other embodiment, or may be deleted or replaced with some of the configurations of the other embodiment.

### Description of Reference Characters

- 1:: Hydraulic excavator (work machine)
- 1A:: Front work device
- 1B:: Machine body
- 2:: Hydraulic pump
- 3:: Track hydraulic motor (hydraulic actuator)
- 4:: Swing hydraulic motor (hydraulic actuator)
- 5:: Boom cylinder (hydraulic actuator)
- 6:: Arm cylinder (hydraulic actuator)
- 7:: Bucket cylinder (hydraulic actuator)
- 8:: Boom
- 9:: Arm
- 10:: Bucket (work implement)
- 11:: Lower track structure
- 12:: Upper swing structure
- 13:: Bucket link
- 18:: Engine
- 20:: Control valve
- 30:: Boom angle sensor
- 31:: Arm angle sensor
- 32:: Bucket angle sensor
- 33:: Machine body inclination angle sensor
- 36:: Machine body position sensor
- 40:: Controller
- 43:: Position and posture computing section
- 44:: Solenoid proportional valve controlling section
- 50:: Work device posture sensor
- 54 to 59:: Solenoid proportional valve
- 81:: Actuator controlling section
- 90:: Operation planning section
- 91:: Automatic operation controlling section
- 92:: Locus deviation determining section
- 93:: Time deviation determining section
- 100:: First inputting section
- 101:: Second inputting section
- 102:: Third inputting section
- 103:: Excavation surface gradient setting section
- 110:: First outputting section
- 111:: Second outputting section
- 200:: Externally connected device
- P1:: Excavation starting position
- P2:: Maximum excavation depth position (excavation-in-progress position)
- P3:: Excavation finishing position
- P4:: Operation finishing position
- R:: Projected operation locus (target locus)
- S1:: Excavation starting state
- S2:: Maximum excavation depth state
- S3:: Excavation finishing state
- S4:: Operation finishing state

## Claims

1. A work machine comprising:
a work device having a work implement;
hydraulic actuators for driving the work device;
a hydraulic pump;
a control valve for controlling a flow rate of a hydraulic fluid supplied from the hydraulic pump to the hydraulic actuators; and
a controller configured to calculate a target locus for a control point on the work implement and control the control valve such that the control point moves on the target locus, wherein
the controller is configured to
calculate a target locus passing through an excavation starting position where the control point is positioned when an excavation is started, an excavation-in-progress position where the control point is positioned when the excavation is in progress, and an excavation finishing position where the control point is positioned when the excavation is finished, and a target posture for the work implement at a time where the control point moves on the target locus, and
control the control valve such that the control point moves on the target locus and that a posture of the work implement at the time where the control point moves on the target locus matches the target posture.

2. The work machine according to claim 1, wherein
the excavation-in-progress position is a maximum excavation depth position that is deepest from a ground surface on the target locus.

3. The work machine according to claim 2, wherein
the controller is configured to calculate the target locus such that the target locus passes through an operation finishing position where the control point is positioned when an excavation operation is finished, in addition to the excavation starting position, the maximum excavation depth position, and the excavation finishing position.

4. The work machine according to claim 3, wherein
the controller is configured to calculate the target posture in the operation finishing position on a basis of a gravitational direction.

5. The work machine according to claim 2, wherein
the work machine includes an externally connected device for inputting a gradient of an excavation surface to the controller, and
the controller is configured to set the excavation starting position, the maximum excavation depth position, and the excavation finishing position, depending on the gradient of the excavation surface.

6. The work machine according to claim 5, wherein
the controller is configured to calculate the target posture in the excavation starting position, the target posture in the maximum excavation depth position, and the target posture in the excavation finishing position, depending on the gradient of the excavation surface.

7. The work machine according to claim 5, wherein
the controller is configured to
set the maximum excavation depth position such that the maximum excavation depth position becomes closer to the excavation starting position as a downward gradient of the excavation surface is smaller or an upward gradient of the excavation surface is greater,
set the maximum excavation depth position such that the maximum excavation depth position becomes closer to the excavation finishing position as the upward gradient of the excavation surface is smaller or the downward gradient of the excavation surface is greater,
set the maximum excavation depth position to a position shallower from the ground surface as the downward gradient of the excavation surface is smaller or the upward gradient of the excavation surface is greater, and
set the maximum excavation depth position to a position deeper from the ground surface as the upward gradient of the excavation surface is smaller or the downward gradient of the excavation surface is greater.

8. The work machine according to claim 5, wherein
the controller is configured to set the excavation starting position and the excavation finishing position so as to make a distance from the excavation starting position to the excavation finishing position smaller as an upward gradient of the excavation surface is smaller or a downward gradient of the excavation surface is greater.

9. The work machine according to claim 2, wherein
the work machine includes an externally connected device for inputting hardness of an excavation object to the controller, and
the controller is configured to set the maximum excavation depth position depending on the hardness of the excavation object.

10. The work machine according to claim 9, wherein
the controller is configured to calculate the target posture in the excavation starting position, the target posture in the maximum excavation depth position, and the target posture in the excavation finishing position, depending on the hardness of the excavation object.

11. The work machine according to claim 9, wherein
the controller is configured to calculate the target posture such that a bottom surface of the work implement is closer in orientation to a line tangential to the target locus as the hardness of the excavation object is larger.

12. The work machine according to claim 9, wherein
the externally connected device is configured to input a gradient of an excavation surface to the controller, and
the controller is configured to
set the maximum excavation depth position such that the maximum excavation depth position becomes closer to the excavation starting position as a downward gradient of the excavation surface is smaller or an upward gradient of the excavation surface is greater,
set the maximum excavation depth position such that the maximum excavation depth position becomes closer to the excavation finishing position as the upward gradient of the excavation surface is smaller or the downward gradient of the excavation surface is greater,
set the maximum excavation depth position to a position shallower from the ground surface as the hardness of the excavation object is larger,
set the maximum excavation depth position to a position deeper from the ground surface as the hardness of the excavation object is smaller,
set the maximum excavation depth position to a position shallower from the ground surface as the downward gradient of the excavation surface is smaller or the upward gradient of the excavation surface is greater, and
set the maximum excavation depth position to a position deeper from the ground surface as the upward gradient of the excavation surface is smaller or the downward gradient of the excavation surface is greater.
